# EUROPEAN PATENT APPLICATION

(11) **EP 1 627 829 A1**
(43) Date of publication of application: **22.02.2006**
(21) Application number: 04103941.3
(22) Date of filing: 17.08.2004
(51) Int. Cl.: B65G 1/04

(54) **Transportable cylindrical storage device**

(71) Applicant: SOLWARE S.r.l., 20052 MONZA (IT)
(72) Inventor: Fazio, Marcello, 20052, MONZA (IT)
(74) Representative: Gervasi, Gemma

(57) **Abstract**

A transportable cylindrical storage device comprises essentially a central shaft suitable for rotating and a plurality of shelves (11) arranged around same; the shaft and the shelves (11) can be rotated as a unit or separately from each other but in such a fashion, however, as to make the operations of charging, discharging and controlling the stored articles executable easily and quickly by means of one or a plurality of zones (3) provided for removing or inserting of the articles themselves. The assembly is mounted on a supporting frame (7,8) suitable for cooperating with handling means suitable for handling the whole storage device.

## Description

### Field of the invention

The present invention relates to a transportable cylindrical storage device that can be immediately and efficiently used in various locales and suitable for stowing and conserving articles such as, for example, spare parts, electronic components, tools and the like.

### Prior art

For installing or maintaining relatively complex machinery, assemblies or plant such as, for example, chemical plant, military installations and equipment, large mechanical plant, production lines and the like, it may be necessary from time to time to bring articles such as complex sets of tools, instruments, spare parts, electrical / electronic mechanical components, in to sites with different and sometimes scant or even no infrastructure Specialist personnel, also sent to the site, sue or may require that articles for doing their jobs quickly without having to reorganize one or several storage facilities.

Presently for such tasks shelving or metal drawers are used, into which the material is placed and removed manually and which are conceptually a development of common shop or home chests of drawers.

In different production sectors these tasks of installation or repair can be very frequent and can follow one another with relatively limited intermediate times between one job and the other; in such cases there is little time to take inventory of the material taken from stocks in the course of the job, replacing the supplies and preparing the latter for the next job as well as calculating the value of the material used in the course of the job.

### Summary of the invention

According to the present invention, a new extremely compact storage device is proposed, which makes it possible to transport the maximum of material completely organized and taking up a minimum of space and which makes possible immediate and easy access to articles as well as the possibility of quickly replacing them.

The storage device according to the invention is a storage device having an essentially circular cross-section and comprises a central shaft and a plurality of shelves arranged about the shaft, subdivided into suitable compartments, said shaft and said shelves being suitable for rotating integrally with each other or independently from each other, but in such a fashion as to make possible quick and easy access by the user to the various compartments and accordingly making it possible to carry out the operations of loading, unloading and control of the stored articles easily and quickly.

The cylindrical storage device according to the invention comprises essentially the following parts which can be organized in different ways according to the specific requirements:
- a central shaft suitable for rotating about its axis;
- a multiplicity of circular shelves disposed over the entire height of the shaft, subdivided into suitable compartments and suitable for rotating integral with or independently of said central shaft, which in any case remains stationary;
- one or a plurality of withdrawal or insertion zones at which the desired compartments are made available;
- a supporting frame suitable for sustaining the central shaft and the internal carrying structure and comprising the said withdrawal and insertion zones;
- possible fixation means for the shelves;
- possible electrical and / or electronic controlling and positioning means suitable for rotating the central rotor according to an electrical control signal, in such a fashion as to position a specific compartment relative to the withdrawal and insertion zone.
- Possible electrical and / or electronic means suitable for rotating the shelves according to an electrical signal, when they rotate independent of the central shaft, so as to position a specific compartment relative to the withdrawal and insertion zone.
- Possible electrical and / or electronic detecting means suitable for detecting the withdrawals and the insertions in and from said compartments of the storage device and suitable for transmitting said detections to a logic unit suitable for generating and providing information on the type, quantity and position of the articles present in the transported storage device;
- Possible logic unit such as, for example, personal or mini industrial computers suitable for processing the information transmitted by the detection units present in all of the storage device compartments;
- an external cover suitable for closing off the internal structure of the storage device.

Many of the components of the storage device according to the invention are defined as "possible" inasmuch as the novel storage device makes possible a wide range of embodiments, from the most simple manually operated ones to the more complex ones with various degrees of automation, recording and data processing.

In every instance, a transportable cylindrical storage device, as embodied using the aforementioned elements, is an easy - to - transport and portable module that is highly organized and easy to manage using suitable software, for example. In addition, its cylindrical corm facilitates achieving satisfactory relationships between outside space requirements and the volume of utilizable loading volume.

The transportable storage device makes automatic management of the stored articles particularly advantageous for tasks that follow upon each other with short intervals between them or without any interval at all, even in hard to reach places or with little infrastructure, making it possible to quickly establish at any time the status of the storage device (for example, the quantity of items remaining in the storage device, of those depleted, the cost of the job).

This type of automatic management of the stored product ready for use, thus sparing the operator the activity of manual management of the storage device, contributing also to reducing the time required for said same jobs.

Other advantages that can be obtained using the present invention will become more apparent to the specialist in the art in the following detailed non-limiting description of several exemplary preferred embodiments.

### Listing of the figures

Fig. 1 diagrammatically represents a three - dimensional view of the external covering of a first embodiment of a transportable storage device according to the present invention;
Fig. 2 diagrammatically represents a front cross-sectional view of a storage device according to the present invention;
Fig. 2A diagrammatically represents a side cross-sectional view of a detail of the connection of the rotating shaft to the base or supporting frame of the storage device of Fig. 2;
Fig. 3 diagrammatically represents a perspective view, from below, of the supporting frame of the storage device of Fig. 2;
Fig. 4 diagrammatically represents a perspective view of the supporting frame and of the rotor (shaft and shelves) of the storage device of Fig. 2;
Fig. 5 diagrammatically represents a perspective view of a box that can be used on the storage device of Fig. 2;
Fig. 6 diagrammatically represents a cross - sectional view of a second embodiment of a transportable storage device according to the present invention;
Fig. 6A diagrammatically represents a perspective view of the chain of transmission of the movement to the disk-shaped shelves of the storage device of Fig. 6;
Fig. 7 diagrammatically represents a three-dimensional view of a device for radial containment of the boxes of the storage device of Fig. 6;
Fig. 8 diagrammatically represents a view of an exemplary embodiment of a panel for radially containing the boxes of the storage device of Fig. 2 or of Fig. 6.
Fig. 9 diagrammatically represents a perspective view of a tubular element for radially containing the boxes of the storage device of Fig. 2 or of Fig. 6 in the alternative to the panel of Fig. 8;
Fig. 10 diagrammatically represents a cross-sectional view of a support device for wheels with toggle joint driving , with the raised wheel and which can be mounted on the storage device of Fig. 2 or Fig. 6;
Fig. 10A diagrammatically represents a cross-section view of the device of Fig. 10., with the wheel lowered.

### Detailed description of the two preferred embodiments of a storage device

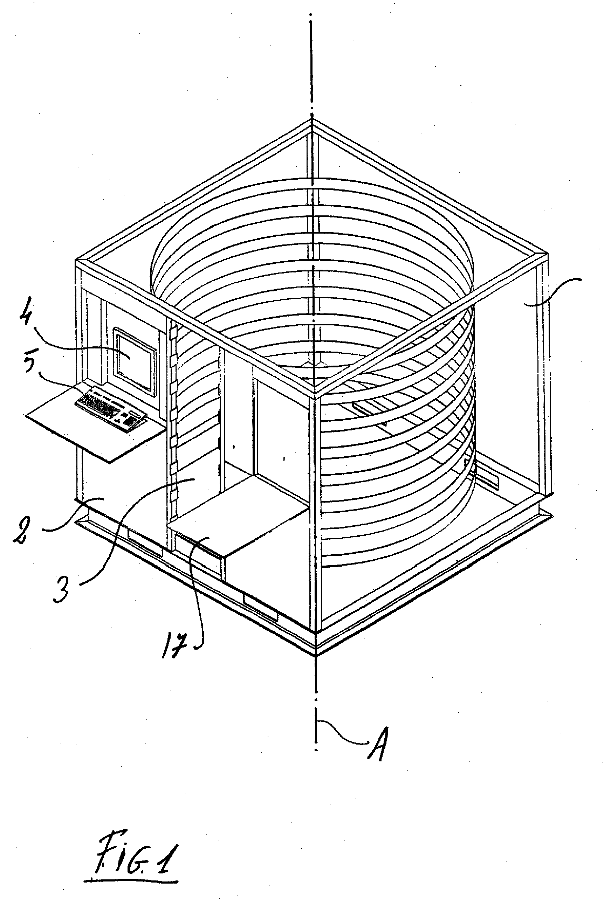

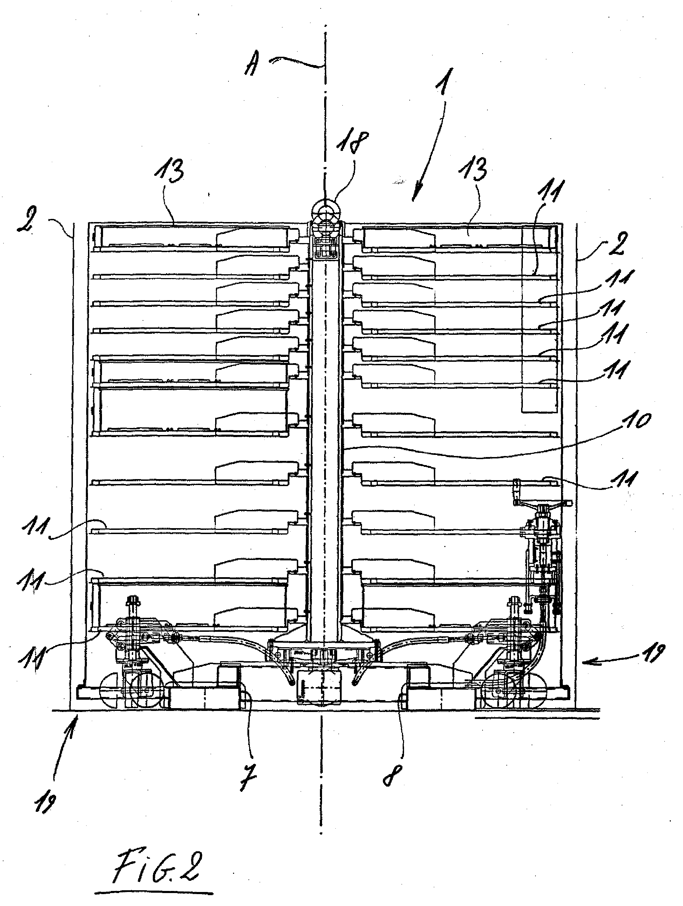

A) We will now describe in detail a preferred embodiment of a transportable storage device according to the present invention, of the type in which the central shaft rotates and the rotating shelves rotate integrally with it.
With reference to Figs. 1, 2 this type of storage device comprises a rotating drum or rotor 1 (Fig. 2), mounted on a supporting frame so as to be able to rotate about a vertical axis A and is enclosed in an outside covering 2 (Fig. 1), having an approximately parallelepiped form, of covering panels.
The external covering 2 has one or more rectangular openings 3 or removal and insertion openings, through which it is possible to insert or remove the objects to be stored or stored, respectively, also called "stored articles" in the following parts of the present application.

The storage device of Fig. 1, comprises, in addition a logic unit 4, 5 such as a personal computer or an industrial mini-computer, for example.

Programs for management of the transportable storage device are installed on the computer such as, for example, databases for managing the incoming and outgoing objects and from the storage device and the relative costs, inventorying the stored objects, managing bar coding systems and compiling reports on the materials removed in previous jobs.

Fig.2 represents a diagrammatic view of a frontal section of the storage device of Fig. 1.

In the present patent application, supporting structure or supporting frame means that which connects the various holding zones used for handling the entire storage device, supporting the weight of the various components such as the rotor 1, the operating motor and the other components of the storage device, and possible logic units present.

Said supporting frame comprises two tubular beams 7, 8 arranged approximately parallel to each other and having, for example, closed rectangular cross - sections and dimensions so as to make it possible to insert the forks of a lifting truck for moving the entire transportable storage device.

Preferably, the distance between the two tubular beams 7, 8 - in the following also called "fork loading beams 7, 8" is such as to make possible the use of conventional standardized forks.

Fig. 2A is a detailed enlargement of Fig. 2. In Fig. 2, 2A the following essential components of the exemplary storage device (A) are shown.

A plurality of support shelves 11 -having an external circular perimeter- are fixed to the shaft 11 (Fig. 2, 2A); the various support shelves are held at a distance from each other using a plurality of tubular spacers 12, for example, which are threaded onto the shaft 10, spacing the shelves 11.

The various shelves 11 are arranged rigidly on the shaft 10 in such a fashion as to form together with the shaft a single integral element rotating relative to the support base of the structure comprised of the fork loading beams 7, 8.

Each shelf 11 is produced by assembling, for example by welding, several extensions of metal sheeting, approximately 1 mm thick, die cut and suitably ribbed, corrugated or fretted.

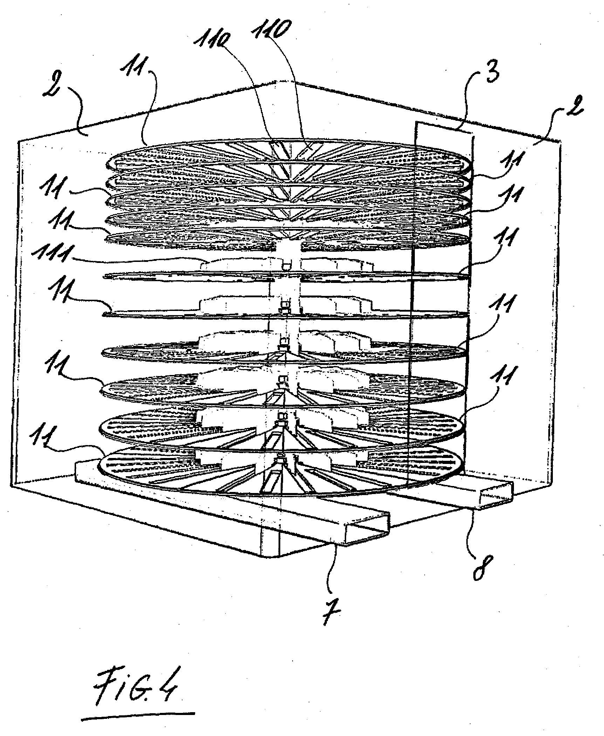

In Fig. 4, the reference 110 indicates one of the different reinforcement ribbings or webs imprinted by dimpling of the shelf sheets 11, whilst reference 111 indicates one of the numerous stiffening tabs arranged radiating on the different shelves 11 for stiffening them in proximity to the shaft 10.

The fact of realizing the shelves 11 in ribbed or corrugated sheet metal contributes to reducing the weight of the storage device.

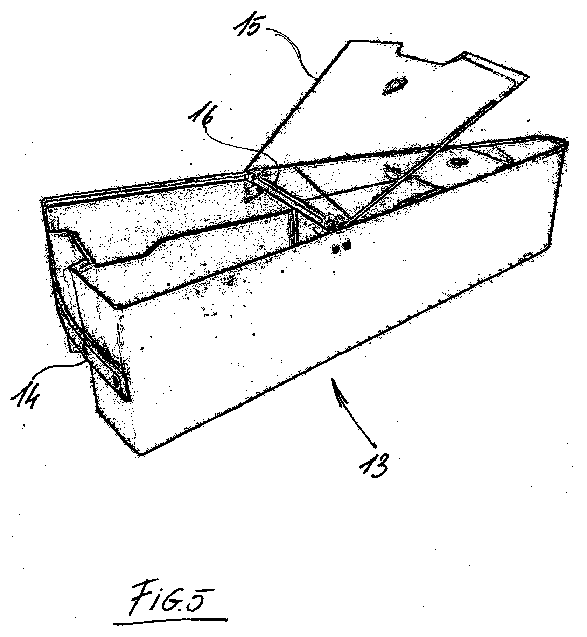

Each shelf 11 can be subdivided into compartments by means of a plurality of drawers or sliding boxes 13 supported upon these (Fig. 5) which advantageously have the approximate form of a cylindrical segment so as to occupy the greatest possible part of the volume included between the outside periphery of the rotor 1 and the shaft 10.

Preferably, each sliding box 13 is closed at the top by an openable cover 15 preferably made of transparent plastic material. In the embodiment of Fig. 5, the openable cover 15 is subdivided into two parts, articulated about the axis of articulation 16 and each individually openable independently of the other. Advantageously, the axis of articulation 16 is arranged approximately in the middle of the length of the box 13: In this fashion, raising the front half of the openable cover, it is possible to access approximately 75 % of the usable volume of the box without pulling it out completely.

A handle or strap 14 is arranged on each box 13 in order to facilitate gripping.

In the embodiment of Figs. 1 - 5, when removing or inserting articles each box 13 can be completely extracted and removed from the shelf 11 and supported on the examination table 17, for example.

The shelves 11 are not necessarily filled with boxes: In the alternative, the products to be stored can be supported directly on the shelves 11 without being placed in boxes and the storage space on each shelf can be subdivided into a plurality of compartments - possibly closed with an front access hatch - by means of partitions or vertical dividers.

In the exemplary embodiment shown in Fig. 2, 2A the shaft 10 is rotated by means of a suitable motor such as an a.c. motor or a d.c. motor 22, for example, which act on the axial bearing 9. Preferably, the motor is mounted next to the storage device on one of the two fork beams 7, 8, for example, or supported by at least one of same: this facilitates and makes moving and transport of the storage device faster.

In order to allow the storage device to operate in the greatest variety of places and under conditions, taking advantage of various type of energy sources, the motor operating the shaft 10 is preferably supplied with low voltage direct current such as 24 V or 18 - 30 V, for example, and said current can be supplied from time to time by an electricity generating assembly - this, too, possibly affixed to the supporting frame of the storage device and movable as a unit with it - by a photovoltaic or aeolic assembly - if the storage device is to operate in places poorly served or not served at all by the electrical grid - or by the electrical mains itself, if available, with monophase alternating current or three-phase current transformed into low tension direct current. In this fashion the switching between the different modes of supply is made easy.

Advantageously, in order to make it possible for the storage device to operate even in the event of motor failure, general electrical outage or in the absence also of photovoltaic power, the transportable storage device includes also a mechanical device for manually rotating the shelves such as a lever - operated system, for example.

Advantageously, for operating the movement and the transport of the storage device, hooking means 18 (Fig. 2) are affixed at the free end of the shaft 10 which, for example, a eyelet, loop or ring made from a metal plate, from a cable, or a chain link, peg, pin suitably arranged and configured.

The supporting frame realized by the two fork beams 7, 8, by the axial bearing 9 and by the shaft 10 is sufficient for making it possible to transport the storage device using a lifting truck or, with adequately robust dimensions of the axial bearing 9, coupling to coupling means 18 to a crane, an overhead crane, or a block and tackle; said frame can be realized so that there is sufficient strength and stability, without requiring other structural elements - such as beam and stiffening sections - and is appreciably lightened relative to other structural solutions.

As is shown in more detail in Fig. 2A, an axial bearing 9 is affixed to the metal plate 701; that is a rotating bearing suitable for sustaining radial, axial and especially flexural loads of the shaft mounted above; a shaft 10 is mounted on the axial bearing 9, preferably tubular and thus internally hollow, which can then rotate about a vertical axis A - or even about an axis that is substantially perpendicular to the fork beams 7, 8 and / or to their plane of support on the ground, whilst with respect to the stresses not parallel to the axis A, the tubular shaft behaves like a projecting bracket framed at the base formed by the two fork beams 7, 8.
Finally, the axial 9 resists axial loads along the axis A, both tractional and compressional.

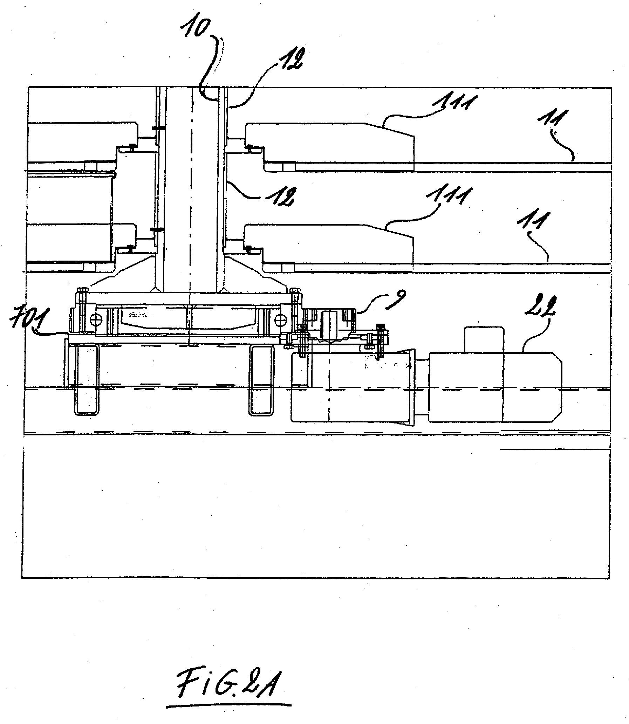

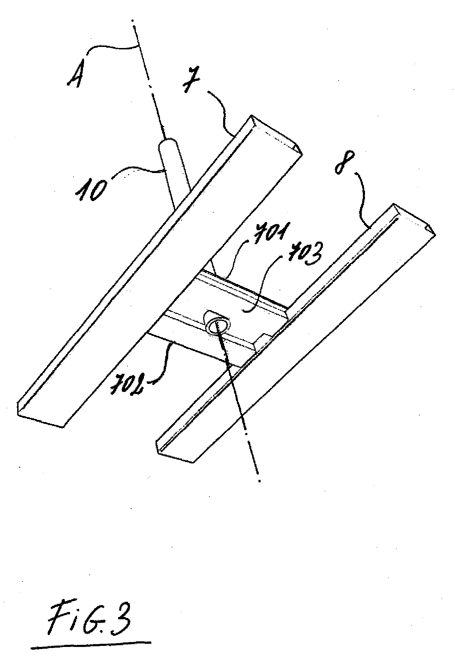

Fig. 3 represents a three dimensional view from the bottom of the supporting frame of Fig. 1: the two tubular beams 7, 8 are connected by a reinforced metal plate 701 at its bottom part, by two beam segments 702, 703 arranged transversely to the two tubular beams 7, 8 so as to comprise a substantially H-shaped support base, where the four ends of the tubular segments 7, 8 are substantially free as is the end of a cantilever, not being substantially connected together by other structural elements but only by covering panels that are substantially devoid of bearing functions for lifting and moving the storage device.
B) We will now describe in detail, with reference to drawings 6, 6A, 7 a second embodiment of the storage device according to the invention, wherein discs for supporting the material do not all rotate integrally about the shaft 10 but independently of each other.

According to this embodiment, a plurality of discoid shelves 11 is mounted on a single shaft 10, which is fixed - welded, for example - like a cantilever, without the possibility of rotating about a longitudinal axis A, on a connecting structure identical or analogous to that defined for the metal plate 701 and the two beam segments 702,703 shown in Fig. 2A; by means of such connecting structures the shaft 10 is rigidly connected to the pair of beams 7, 8 with a closed rectangular section, for example, parallel to them and which allows a basic H-shaped structure substantially and engaging it with a lifting truck or other means for moving. Also in this embodiment of a storage device according to the present invention, the upper end of the shaft 10 can be advantageously affixed by a loop or other connecting means 18, as described hereinbefore, in order to make it possible to connect and to raise the storage device.

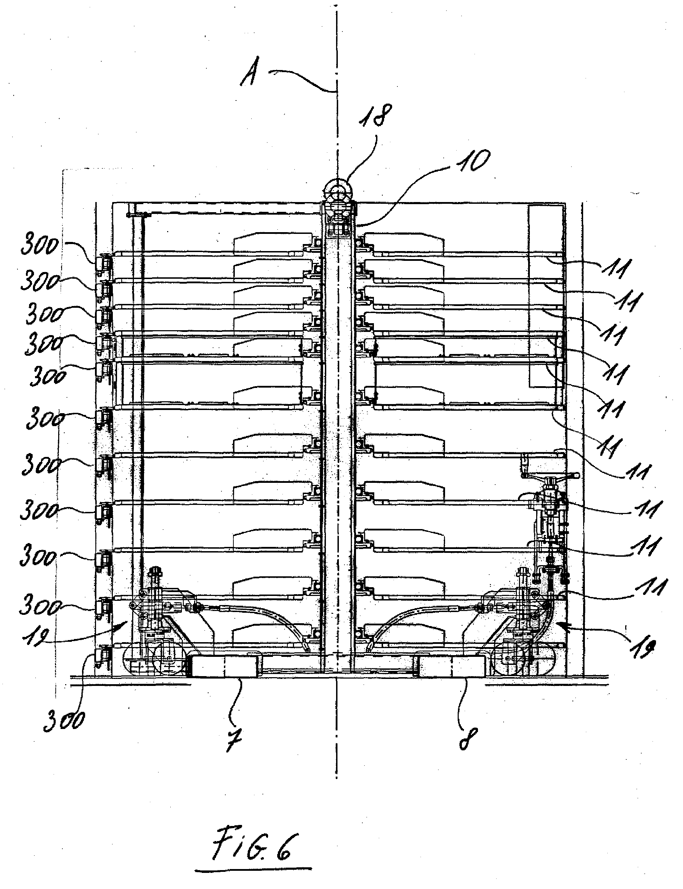

According to the embodiment of Fig. 6, 6A each shelf 11 is affixed to the shaft 10 by means of a bearing, for example a roller bearing so as to be able to rotate about the axis A independently of the other shelves 11; in addition, each shelf 11 is operated, independently of the other shelves 11, by it own electric motor, one for each shelf 11, for example by an electric motor 300 using low voltage direct current (Fig. 6A). Operating each discoid shelf 11 independently of the others, it is possible to substantially reduce the rotating mass set into movement at each point of consultation of the storage means, equally reducing the power absorbed by the motors and favoring the utilization of solar or wind energy; in addition, it is possible to simultaneously call up two boxes from different shelves, with shorter storage device look up times.

In one particular embodiment, each motor 300 for independently operating a shelf 11 can have a power of less than 80 W.

Fig. 6A diagrammatically represents an exemplary preferred embodiment of the operation of a shelf 11 using an electric motor 300 independently of the other shelves 11: on the edge of the shelf 11 a roller chain 301, closed to form a ring and fixed to the shelf 11 so as to integrally rotated with it.

The roller chain is engaged by a pinion 302, operating - by means of a suitable geared motor - by the electric motor 300 on low voltage direct current at 24 volts, for example. In this fashion, coupling is made between a pinion having a relatively small diameter and the equivalent of a large diameter gear - for example of approximately 2 meters in diameter with costs and weight much more contained than when realizing a conventional massive gear wheel.

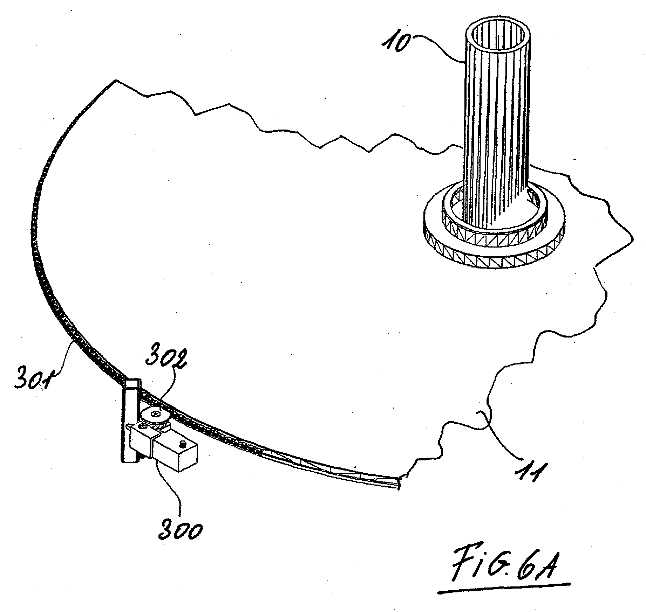

Fig. 7 diagrammatically represents a system for radial blocking of the boxes 13' placed on shelves 11, which makes it possible for the transportable storage device to operate also supported upon an inclined floor. the end of the boxes 13' which, when the boxes are inserted, is closer to the axis of rotation A, is configured in such a fashion as to present one latch part 900, a true and proper latch, for example, or a pin, a recess or a groove made in the walls of the box.

A series of annular elements 901 is arranged on the shaft 10, on which the latch part 900 can engage when the respective box 13' is supported on a rotating shelf 11, in order to prevent the box 13' from slipping out radially.

The annular pin is interrupted along a circumferential path 902 of its outside edge in such a fashion as to disengage the box 13' and allow it to slide out when the rotating shelf 11, along its rotation about the axis A, is in one or several predetermined angular sectors, disposed relative to the insertion and removal openings.

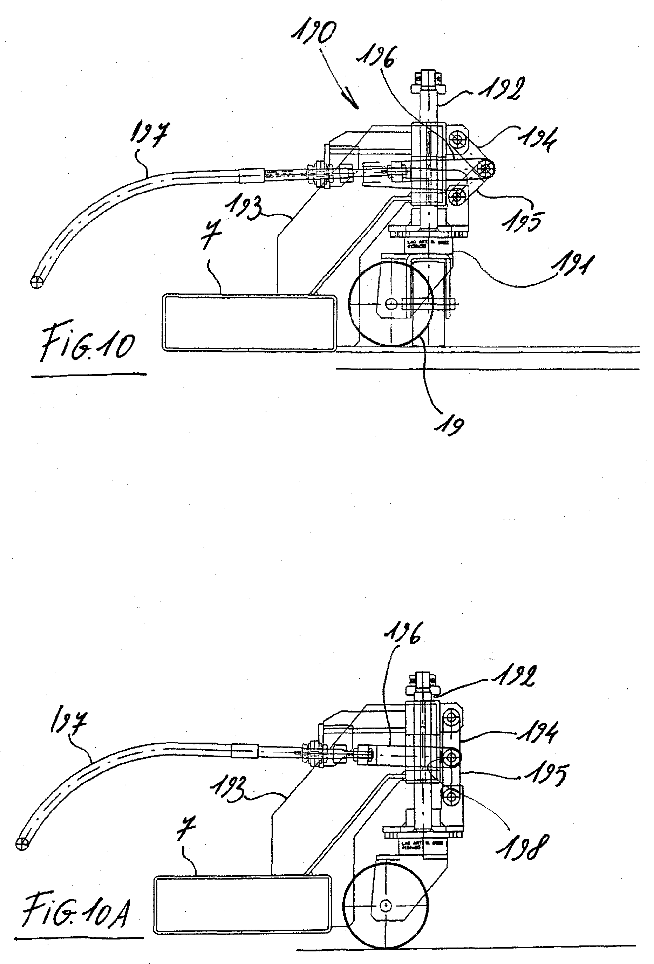

Advantageously but not necessarily, retractable wheels 19 can be arranged on a transportable storage device according to the present invention, on which the storage device can run in order to manually move it during installation to the place where it is to operate; two examples of the disposition of such retractable wheels on the supporting frame of the storage device are shown in Figures 2, 6, whilst an exemplary preferred embodiment of such retractable wheels is represented in more detail in Figs. 10, 10A.

The retractable wheels 19 of the exemplary embodiment of Fig. 2 are four in number, two on each tubular beam 7, 8.

The retractable wheels are lowered when it is necessary to reposition the storage device, pushing it by hand, and are raised for supporting the storage device on the ground on the tubular beams 7, 8 when the storage device is in its final position.

Figure 10 diagrammatically represents a cross-section view of an exemplary preferred embodiment of a support for a retractable wheel 190 suitable for being installed on a mobile storage device according to the present invention. This type of support comprises a fork support 191, well-known per se, on which the wheel 19 is attached; the support 191, stationary or rotary about a vertical axis of rotation, is attached to a vertical spindle 192, which can run vertically on the inside of a sleeve in the fastening support 193, which in turn is affixed - welded, for example - to one of the tubular beams 7, 8.

Advantageously, the vertical slipping movements of the pivot 192 relative to the fastening support 193 are controlled by a toggle joint mechanism comprising two connecting rods 194, 195 affixed at one of their ends to the fastening support 193 and at the other end to a horizontally sliding spindle 196 which controls the opening of the closure of the toggle joint itself.

Regulating the horizontal position of the sliding spindle 196 with a remote control system of known type suitable for transmitting commands either of pushing or of pulling - for example, using a sliding laminated flexible cable on balls 197 of the type produced by the Flexball company - and operated by a manual control wheel it is possible to raise or to lower the retractable wheels 19.

On the fastening support 193 a mechanical stop 198 (Fig. 10A) situated at one side of the vertical spindle 193 and against which the mobile ends of the connecting rods 194, 195 can take their support in a position of stabile equilibrium so as to prevent subsequent lowering of the vertical spindle 192: in this configuration, the weight of the transportable storage device that rests on the wheel 190 in question even if it is lowered, loads the mechanical stop 198 and on the fastening support 193 and the flexible cable 197 is not practically stressed even if the storage device being locked in the raised position relative to the floor.

This type of manual operating system of the wheels 19 makes it possible to reduce the empty weight and the power consumption of the storage device, facilitating its use in areas remote from the electrical mains.

The transportable storage device according to the invention can be shipped or used for an operative task, inserted into a standard container - for example, of the type commonly used for the transport of goods by ship or rail: for this purpose, the outside space requirements of the transportable storage device are only conveniently less than that of the cargo bay of the common commercial containers and the transportable storage device can be affixed to the inside of the container with suitable fastenings such as supported on anti-slip pads, bolted, clamped or in a fashion as to make it more stabile during transport.

The use of the storage device according to the invention on the inside of a commercial container, in addition to providing easy shipping using normal means of transport, allows acclimatization and assures optimum protection against break-in, burglary and in general against the external environment.

The embodiments described hereinbefore can be subjected to numerous modifications and variants without departing from the scope of the present invention.

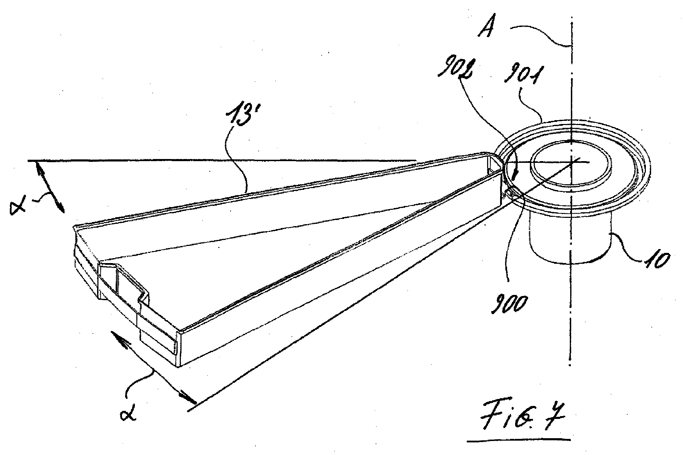

For example, as shown in Fig. 8, a cylindrical partition 20 can be arranged around the circular shelves 11 of the two previously described embodiments and with a suitable radial gap at the outside edge of said shelves, for example, made of a foil or with metal sheet plates and affixed to the supporting frame or even to the nonrotating body of the storage device in order to substantially cover the inside height of the cylindrical storage device but leaving a vertical strip uncovered or even an opening 21 corresponding to every removal and insertion opening, so as to allow access to the rotating circular shelves 11 and, for example, removing and inserting the removable boxes 13.

The cylindrical walls radially contain the boxes or other objects supported on the rotating circular shelves 11, preventing any radial slipping of the boxes 13, which could occur when the storage device is supported on an inclined floor; it comprises in addition a safeguard against burglary and break-ins; preferably the boxes 13 are maintained separated by the cylindrical walls 20 during rotation of the circular shelves, in order to prevent frictional wear.

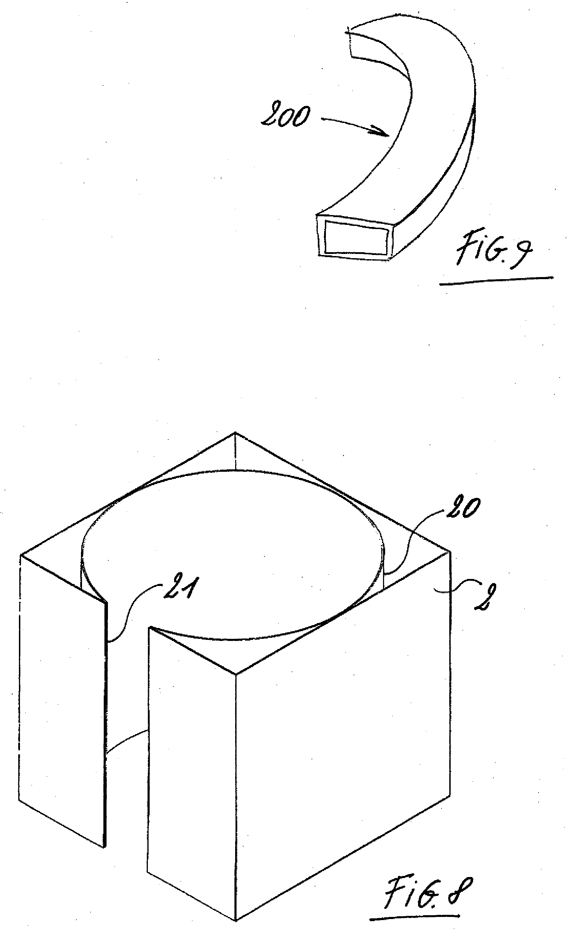

According to a different exemplary embodiment, the cylindrical wall 20 can be replaced, completely or partially, for example, with a plurality of stiffening plates or rigid bands 200 curved in a circular arc of the profiled segments; for example, a closed rectangular cross-section profile, in order to obtain substantial segments of toroidal elements (Fig. 9).

These rigid bands 200 are arranged around the rotor 1 along a series of circumferences on the orthogonal plane of the axis A of the rotor itself, suitably spaced among themselves.

With respect to the cylindrical wall 20, the bands 200 make it possible to appreciably reduce the weight of the automatic storage device.

One preferred embodiment for the compartments supported on the shelves 11 is that of the box illustrated in Fig. 5; however, according other variant embodiments, the boxes 13 can have an external from different from that of a cylinder and can be oblong boxes variously tapered towards the inside of the rotor 1 but even also non-tapered; or the boxes 13 can also be replaced with a different type of container; for example, stationary compartments with or without lids; the cross-sections of the fork beams 7, 8 can also be open; for example, C- or H- shaped.

Any other modification and variant which falls within the intent and field of equivalence of the claims is included herein.

## Claims

1. A cylindrical transportable storage device comprising essentially a central shaft suitable for rotating and a plurality of shelves arranged about said shaft, said shaft and said shelves being suitable for rotating integrally or independently but in such fashion as to make the operations of loading, unloading and control of the stored article easy and fast through one or more predetermined zones for removing or inserting the articles themselves, the assembly being affixed to a supporting frame suitable for coupling with the handling means suitable for handling the whole storage device.

2. The cylindrical storage device according to Claim 1, comprising fixing means suitable for affixing the shelves to the central shaft so as to integrally rotate with the shaft itself, the shaft being operated by suitable mechanical, electrical and / or electronic means.

3. The cylindrical transportable storage device according to Claim 1 comprising mechanical, electrical and / or electronic means suitable for rotating the individual shelves independently of each other and the central shaft, which is maintained stationary.

4. The cylindrical transportable storage device according to Claim 1, wherein the shelves are subdivided into compartments by means of dividing sections, ribs or walls radially affixed thereto.

5. The cylindrical transportable storage device according to Claim 1, comprising triangular based boxes supportable on rotating shelves, so as to subdivide the shelves into compartments.

6. The cylindrical transportable storage device according to Claim 4 or 5 comprising mechanical, electrical and / or electronic means suitable for positioning a predetermined compartment at a removal or insertion zone by means of rotation of the shaft or of the individual shelves.

7. The cylindrical transportable storage device according to Claim 1, comprising a system of retractable wheels operated by mechanical, electrical and / or electronic means, said retractable wheel system being suitable for making the displacement of the storage device itself easier.

8. The cylindrical transportable storage device according to Claim 1 comprising electrical and / or electronic detection means suitable for detecting the removals from and insertions into the compartments of the storage device and for providing information on the type, quantity and positioning of the articles present in the transported storage device.

9. The cylindrical transportable storage device according to Claim 1 comprising a logic unit such as, for example, personal computers or industrial mini computers, suitable for processing the information transmitted from the detection means concerning the articles present in the compartments of the storage devices, providing real time updates on the status of the storage device itself.

10. The cylindrical transportable storage device according to Claim 1 comprising a partition suitable for radially containing the boxes supported on or affixed to the rotary shelves, said partition being arranged with suitable gap relative to the shelves and provided with suitable openings to allow the removal or insertion of the articles from the selected box.

11. The cylindrical transportable storage device according to Claim 1 comprising one or more annular elements suitable for radially containing the individual rows of boxes supported on or affixed to the rotary shelves, said one or more annular elements being arranged with suitable gap relative to the boxes and with suitable openings to allow the removal or insertion of the articles from the selected box.

12. The cylindrical transportable storage device according to Claim 1 comprising suitable hooking means at the upper end of the shaft.

13. The cylindrical transportable storage device according to Claim 1, wherein the supporting frame is suitable for allowing fitting forks of the handling means for handling the storage device.
